# EUROPEAN PATENT APPLICATION

(11) **EP 1 808 146 A1**
(43) Date of publication of application: **18.07.2007**
(21) Application number: 07425007.7
(22) Date of filing: 09.01.2007
(51) Int. Cl.: A61C 1/00, C02F 1/44, C02F 103/02

(54) **Process and apparatus for the treatment of medical water**

(30) Priority: 11.01.2006 IT BO20060013
(71) Applicant: Ecoplus S.R.L., 40068 San Lazzaro di Savena (BO) (IT)
(72) Inventor: Bolognini, Roberto, 40139 Bologna (IT); Garelli, Daniele, 40139 Bologna (IT)
(74) Representative: Trentini, Ermanno

(57) **Abstract**

The invention relates to a process, and system for the implementation thereof, for achieving a dual sterilisation of the water supplied to a dental unit, so as to eliminate both the waterborne bacteria and the bacterial contamination which forms in the waterlines in proximity to the connection points of dynamic instruments.

## Description

The present industrial relates to a procedure, and system for the implementation thereof, which renders mains drinking water suitable also for medical use.

With reference in particular to dental surgeries, where the various apparatus including dental units, heat disinfectors and scrub sinks, normally connected to the mains water supply, necessarily require a sterilisation and purification of the water in circulation, if not indeed a supply of distilled water, we may affirm that none of the current systems is able to furnish the guarantee of total hygiene which is achieved by the present invention. It not only ensures the elimination of inorganic impurities such as metals and dissolved salts, but also provides a dual, direct action against the organic micro-organisms harboured in the mains water used to supply dental instruments and against bacteria and viruses originating from the oral cavity of patients undergoing treatment. The latter are, in fact, responsible for the contamination of the terminal sections of dental instrument waterlines, and consequent contamination of subsequently treated patients, though the water in circulation may itself be determined to be bacteriologically pure.

It is well known that, due to phenomena of retraction or capillary action, biological fluids from the oral cavity contribute to the formation of so-called "biofilms", which are none other than a bacterial community entrapped within a polysaccharide matrix that deposits on the walls of instrument waterlines and causes, according to reliable estimates, 65% of hospital infections.

The present invention thus aims primarily to eliminate both the first source of contamination, by means of a reverse osmosis process that renders mains water pure and safe, and the second source, by means of a chlorine dioxide based disinfection process, specifically conceived for sterilisation of the environment which may have been contaminated due to spray retraction phenomena.

These and other characteristics will now become more apparent upon reading the description of a simple embodiment of the invention, which is given for purely illustrative purposes and does not restrict the scope of this patent.

Reference is made to the appended drawings where:
Fig.1
Illustrates a preferred embodiment of a dental unit water supply system. With reference to said figure, 6 indicates the mains water outlet, 9 a minimum pressure switch, 11 a feed solenoid valve, 14 a sediment pre-filter, 13 a carbon block pre-filter, 10 a delivery pump and 15 a pressure gauge for the water. 16 indicates the vessel containing the first osmotic membrane 17, 16' the second vessel containing the second membrane connected in series; the latter, jointly with the first membrane, induces the separation of the concentrate, which is channelled to the drain 1 through the flow restrictor 7, from the permeate, which after crossing the check valve 18, arrives at the water unit F through the nozzle 2. D indicates the umbilical cable connecting the unit (F) to the electronic control, B a flow gauge for the permeate, C an injection pump that draws chlorine dioxide from the container A and introduces the right amount thereof into the permeate to form the treated water. 3 indicates the nozzle that discharges the treated water from the unit (F), 4 the inlet and outlet nozzles of the tank S, 8 a maximum pressure switch, 5 the outlet nozzle for the treated water, which is ready to be supplied, in the specific case illustrated, to the dental unit indicated as E, and 12 the electric controller.

In practice the construction details, dimensions, materials, shape and other aspects of the invention may vary without departing from the scope of the present industrial patent; in fact, the invention thus conceived lends itself to numerous adaptations and variants, all falling within the realm of the inventive concept. In addition, all the elements may be replaced by other technically equivalent ones.

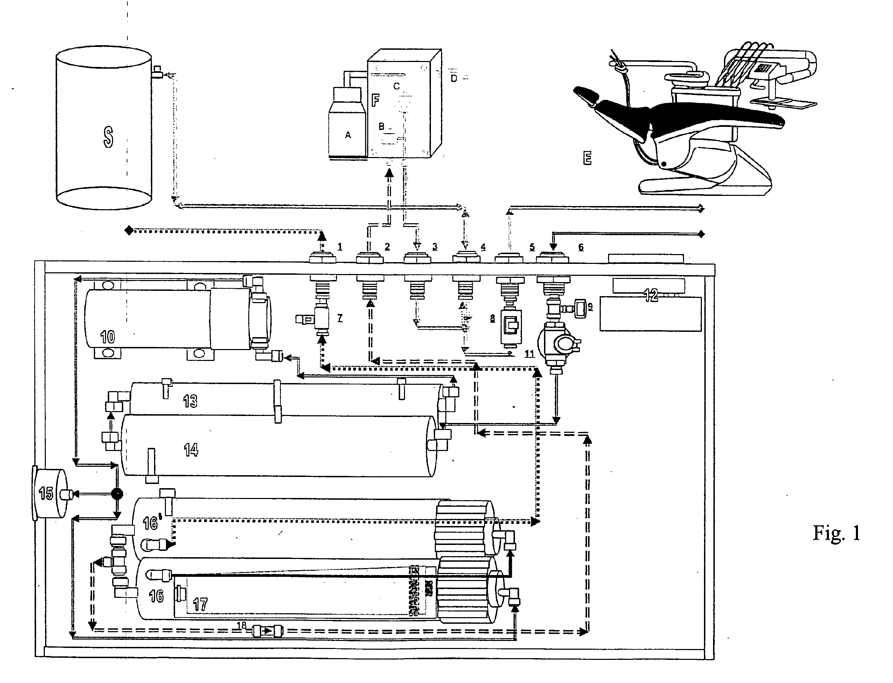

## Claims

1. **PROCESS AND APPARATUS FOR THE TREATMENT OF MEDICAL WATER**
**characterised in that** the municipally supplied water initially undergoes a reverse osmosis treatment and then a cold sterilisation treatment with, for example, chlorine dioxide, before arriving at the point of distribution.

2. **PROCESS AND APPARATUS FOR THE TREATMENT OF MEDICAL WATER**
wherein the apparatus serving to implement the claimed process, specifically conceived in a preferred embodiment for the supply of a dental unit, is **characterised by** a reverse osmosis unit comprising a minimum pressure switch (9), feed solenoid valve (11), sediment pre-filter (14), carbon block pre-filter (13), delivery pump (10), water pressure gauge (15), two series-connected membrane vessel assemblies (16,16') incorporating osmotic membranes (17), a check valve (18) for the so-called permeate and a flow restrictor (7) for the so-called concentrate.
A unit (F) for treating the permeate, comprising a container of chlorine dioxide (A) or another suitable sterilant, a flow gauge (B), an injection pump (C) and cable (D) for the connection to the electronic control.
A storage tank (S) for the so-called treated water and a maximum pressure switch (8) controlling the supply to the user (E).

3. **PROCESS AND APPARATUS FOR THE TREATMENT OF MEDICAL WATER**
according to the previous claims, **characterised in that** a single system may serve one or more dental units or other medical equipment and fixtures and that the system may be partly or completely external to, or incorporated in, the dental unit.

4. **PROCESS AND APPARATUS FOR THE TREATMENT OF MEDICAL WATER**
according to the previous claims, **characterised in that** use of the so-called treated water may be extended to applications of an industrial nature relating to products, e.g. the washing of foodstuffs prior to sale, or relating to product containers, e.g. the washing of bottles prior to bottling.
